# EUROPÄISCHE PATENTSCHRIFT

(11) **EP 0 446 709 B1**
(45) Veröffentlichungstag und Bekanntmachung des Hinweises auf die Patenterteilung: **15.06.1994**
(21) Anmeldenummer: 91102916.3
(22) Anmeldetag: 28.02.1991
(51) Int. Cl.: B60G 17/052, B62D 61/12, B60G 11/46

(54) **Fahrzeugsachsaufhängung**
Vehicle axle suspension
Suspension d'essieu de véhicule

(30) Priorität: 10.03.1990 DE 4007634
(43) Veröffentlichungstag der Anmeldung: 18.09.1991
(73) Patentinhaber: Otto Sauer Achsenfabrik Keilberg, 63856 Bessenbach (DE)
(72) Erfinder: Büttner, Josef, c/o Keil & Schaafshausen, W-6000 Frankfurt am Main 1 (DE)
(74) Vertreter: Keil, Rainer A., Dipl.-Phys. Dr.

(56) Entgegenhaltungen:
- EP-A- 0 236 130
- EP-A- 0 440 571
- DE-C- 1 655 679
- FR-A- 2 521 502
- GB-A- 2 191 741
- US-A- 3 970 293
- US-A- 4 783 096

## Beschreibung

Die Erfindung bezieht sich auf eine Fahrzeugachse gemäß dem Oberbegriff des Anspruchs 1. Eine derartige Fahrzeugachse geht aus der FR-A-2 521 502 hervor. Eine ähnliche Fahrzeugachse ist beispielsweise aus der EP-A-0 137 953 bekannt. Beispiele für ähnliche Fahrzeugachsen jedoch ohne Achsanhebevorrichtung, ergeben sich aus der DE-A-2 100 048 und der EP-A-0 306 849.

Zum Beispiel für sogenannte Kombitrailer, welche sowohl als Bahnwaggon an ihrem vorderen und hinteren Ende mit ihrem Chassis auf schienengebundenen Tragwagen abgestützt als auch als Straßenfahrzeug genutzt werden sollen, werden außerordentlich große Federwege benötigt, welche bei den herkömmlichen Fahrzeugachsaufhängungen nur durch übermäßige Verlängerung der Luftfeder erreicht werden könnten. Durch eine solche Verlängerung ergeben sich jedoch problematische Bauhöhen sowie die Gefahr eines Abknickens der Federbälge. Ein ähnliches Problem außergewöhnlich großer Federwege ergibt sich dort, wo Sattelaufleger mittels Zugmaschinen transportiert werden sollen, welche unterschiedliche Sattelkupplungshöhen aufweisen, welche durch einen größeren Federweg ausgeglichen werden müssen.

Aufgabe der vorliegenden Erfindung ist es, eine Fahrzeugachse der eingangs geschilderten Art mit einfacher zuverlässiger Konstruktion zu schaffen, welche einen geringen Bedienungsaufwand erfordert.

Diese Aufgabe wird erfindungsgemäß durch die Merkmale des Anspruchs 1 gelöst.

Auf diese Weise kann die gesamte bisher schon eingesetzte und standardisierte Luftfederanordnung im wesentlichen bestehend aus der beispielsweise aus Tragfederblatt und Führungsfederblatt bestehenden Blattfederanordnung, der Achseinspannung derselben dem Tragarm, und der verhältnismäßig kurzen Luftfeder verwendet werden, wobei sich jedoch die Luftfeder nicht unmittelbar an dem Chassis abstützt, sondern nur mittelbar über die relativ zu dem Chassis schwenkbar gelagerte Schwinge, welche je nach der Ausfahrstellung des Luftbalges in veränderbarer Höhe eine obere Abstütztebene für die Luftfeder bildet. Bei voll ausgefahrenem Luftbalg und belüfteter Luftfeder aber auch bei teilweise oder ganz eingefahrenem Luftbalg ist das mit der erfindungsgemäßen Achsaufhängung ausgestattete Fahrzeug als Straßenfahrzeug verwendbar. Für den Fall, daß das Fahrzeug als Bahnwaggon auf schienengebundenen Trägerfahrzeugen vorne und hinten aufgebockt werden soll, kann der Luftbalg mit Hilfe der Achsanhebevorrichtung vollständig eingefahren und bei Entlüftung der Luftfeder auch noch die Achse relativ zu der Schwinge angehoben werden, so daß auch außerordentlich große Lifthöhen, wie sie beispielsweise für Großbritannien gefordert werden, erreichbar sind. Mit Hilfe des mehr oder weniger ausfahrbaren Luftbalges kann auch auf einfache Weise eine Anpassung an unterschiedliche Sattelkupplungshöhen von Zugmaschinen erfolgen, so daß das mit der erfindungsgemäßen Achsaufhängung ausgestattete Fahrzeug die maximal zulässige Schräglage auch bei erheblichen Höhenunterschieden der Sattelkupplungen nicht übersteigt.

Die erfindungsgemäße Achsaufhängung ist aufgrund der weitgehenden Verwendbarkeit von Standardteilen kostengünstig und funktionssicher herstellbar. Trotz des erheblich vergrößerten Federweges bleibt die Bauhöhe verhältnismäßig gering.

Das Stellglied ist als zwischen Schwinge und Chassis wirksamer Luftbalg ausgebildet, so daß kein gesondertes, z.B. hydraulisches oder elektrisches Betätigungssystem für das Stellglied erforderlich ist, sondern beispielsweise die Druckluftzufuhr, welche für die Luftfeder ohnehin erforderlich ist, ausgenutzt werden kann.

Gemäß einer vorteilhaften Weiterbildung des Erfindungsgedankens kann hierbei die wirksame Querschnittsfläche des Luftbalges des Stellgliedes größer als die wirksame Fläche des Luftfederbalges der Luftfeder sein. Wenn dann der Luftbalg des Stellgliedes und der Luftfederbalg der Luftfeder mit gleichem Druck beaufschlagt werden, erfolgt beim Fahren als Straßenfahrzeug die Einfederung ausschließlich im Bereich der Luftfeder, während der Luftbalg aufgrund der größeren Krafteinwirkung auf die Schwinge von oben nicht einfedert, sondern praktisch als starres Glied wirkt. Auf diese Weise können die bewährten Einfederungseigenschaften der Luftfederanordnung erhalten werden.

Besonders günstige geometrische Verhältnisse ergeben sich dann, wenn die Schwinge mit ihrem vorderen Ende an dem chassisfesten Lagerpunkt gelagert ist, so daß die jeweilige Schwinge über ihre gesamte Länge gleichsinnig verschwenkbar ist.

Hierbei bietet sich zur weiteren Vereinfachung der Konstruktion an, daß der Führungslenker und die Schwinge einen gemeinsamen Lagerpunkt haben.

Die Lagerpunkte des Führungslenkers und/oder der Schwinge können dabei in der für den Führungslenker an sich bekannten Weise an einem von dem Chassis nach unten ragenden Lagerbock angeordnet sein, so daß der erforderliche Freiraum für die Unterbringung der Luftfederung, der Schwinge und des Stellgliedes vorhanden ist. Der bzw. die Lagerpunkte können dabei in einfacher Weise von einem in dem Lagerbock quer zur Fahrzeuglängsrichtung angeordneten Lagerbolzen gebildet sein.

Bei der aus der EP-A-0 137 953 bekannten Fahrzeugachsaufhängung ist jeweils beidseitig der Fahrzeugmittellängsebene ein zwischen Chassis und Achskörper wirksame Stoßdämpfer vorgesehen, welcher in dem bekannten Fall einerseits an dem Lagerbock und andererseits an der starren Achseinspannung angelenkt ist. Im Rahmen der Erfindung wird nun vorgeschlagen, den Stoßdämpfer mit seinem einen Ende an der Schwinge anzulenken. Hierdurch kommt man trotz des erheblich vergrößerten Federweges mit einem nach wie vor kurzen Stoßdämpfer aus, da der eine Anlenkpunkt des Stoßdämpfers mit der Schwinge verschwenkt wird.

Es ist auch an sich bekannt, Fahrzeugachsaufhängungen zur Berücksichtigung unterschiedlicher Beladung mit einem Luftfederventil für die lastabhängige Druckbeaufschlagung der Luftfeder auszustatten, welches über ein den lastabhängigen Einfederweg der Luftfeder feststellendes Gestänge regelbar ist. Denn die Luftfeder wird umso stärker beansprucht und damit zusammengedrückt, je stärker das Fahrzeug beladen ist. In diesem Fall wird, um die gleiche Fahrzeughöhe einzuhalten, die Luftfeder entsprechend stärker mit Druckluft beaufschlagt. Diese Kompensation erfolgt über das genannte Luftfederventil. Erfindungsgemäß wird nun vorgeschlagen, dieses Luftfederventil, welches üblicherweise chassisfest angeordnet ist, nunmehr an der Schwinge selbst anzuordnen, so daß auch hier mit den herkömmlichen Luftfederventil und dem herkömmlichen Gestänge gearbeitet werden kann, da sich die geometrischen Verhältnisse von Schwinge zu Achskörper ähnlich verhalten, wie bei den bekannten Fahrzeugachsaufhängungen diejenigen zwischen Chassis und Achskörper. Auch durch dieses Erfindungsmerkmal wird daher die Konstruktion der Fahrzeugachsaufhängung noch einfacher und zuverlässiger.

Besonders günstige geometrische Verhältnisse für die erfindungsgemäße Fahrzeugachsaufhängung ergeben sich dann, wenn die Schwinge unter einem stumpfen Winkel derart abgewinkelt ist, daß der eine, vorzugsweise kürzere, an dem Lagerpunkt angelenkte Arm von vorne nach hinten schräg nach oben und der andere, vorzugsweise längere, frei schwenkbare Arm in voll ausgefahrener Lage des Stellgliedes etwa horizontal verläuft. Auch diese Art der Ausbildung der Schwinge trägt zur geringen Bauhöhe bei.

Gemäß Anspruch 1 ist die maximale Ausschwenkung der Schwinge durch einen mechanischen Anschlag begrenzt, welcher beispielsweise die normale Fahrposition der Fahrzeugachse bei Verwendung des Fahrzeuges als Kombitrailer im Straßenverkehr festlegt.

Um die Fahrzeugachse beispielsweise bei Verwendung eines Kombitrailer als aufgebockter Bahnwaggon zu sichern, kann die Fahrzeugachse in der in diesem Fall maximal angehobenen Lage mechanisch verriegelbar sein. Die mechanische Verriegelung wird zweckmäßigerweise selbsttätig, z.B. durch die Druckbeaufschlagung des Stellgliedes und/oder der Luftfeder wieder gelöst.

Im Rahmen der Erfindung werden die an sich bekannten Achsanhebevorrichtungen eingesetzt, um bei vollständig eingefahrenem bzw. vollständig entlüftetem Luftbalg und entlüfteter Luftfederung die Fahrzeugachse in dem erforderlichen Maß anzuheben. Die Achsanhebevorrichtung kann beispielsweise in der Mitte des Achskörpers angreifen, es ist aber beispielsweise auch möglich, einen einseitigen Achslift einzusetzen, wie er in der EP-A-0 137 953 vorgeschlagen worden ist.

Weitere Ziele, Merkmale, Vorteile und Anwendungsmöglichkeiten der vorliegenden Erfindung ergeben sich aus der nachfolgenden Beschreibung von Ausführungsbeispielen der Erfindung anhand der Zeichnung.

Es zeigen:
- Fig. 1: schematisch in Seitenansicht eine die Erfindung aufweisende Fahrzeugachsaufhängung im Bereich einer Seite einer Fahrzeugachse, wobei die Anordnung am gegenüberliegenden Ende des Achskörpers vorzugsweise entsprechend ausgebildet ist,
- Fig. 2: eine Darstellung entsprechend Fig. 1, wobei jedoch das Stellglied vollständig entlüftet ist, während es bei der Darstellung in Fig. 1 vollständig belüftet ist, und
- Fig. 3: eine ähnliche Darstellung wie die in Fig. 1, wobei durch die unterschiedliche Lage des Schwenkarmes und die gestrichelt angedeuteten Möglichkeiten des Schwenkbereiches die wählbare Fahrhöhe und der gesamte mögliche Federweg verdeutlicht sind.

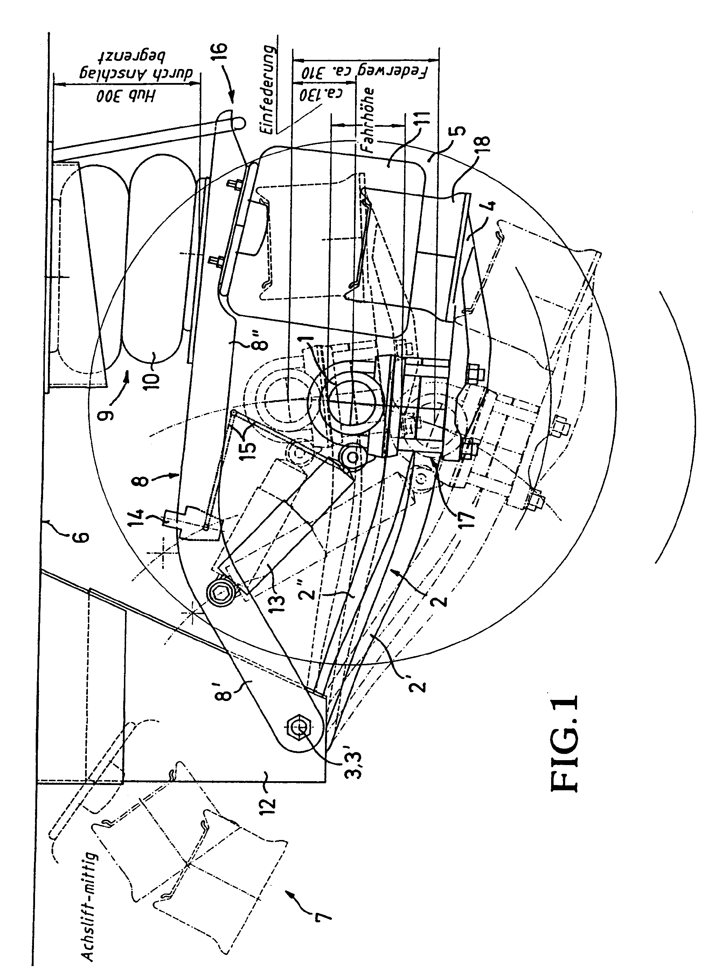

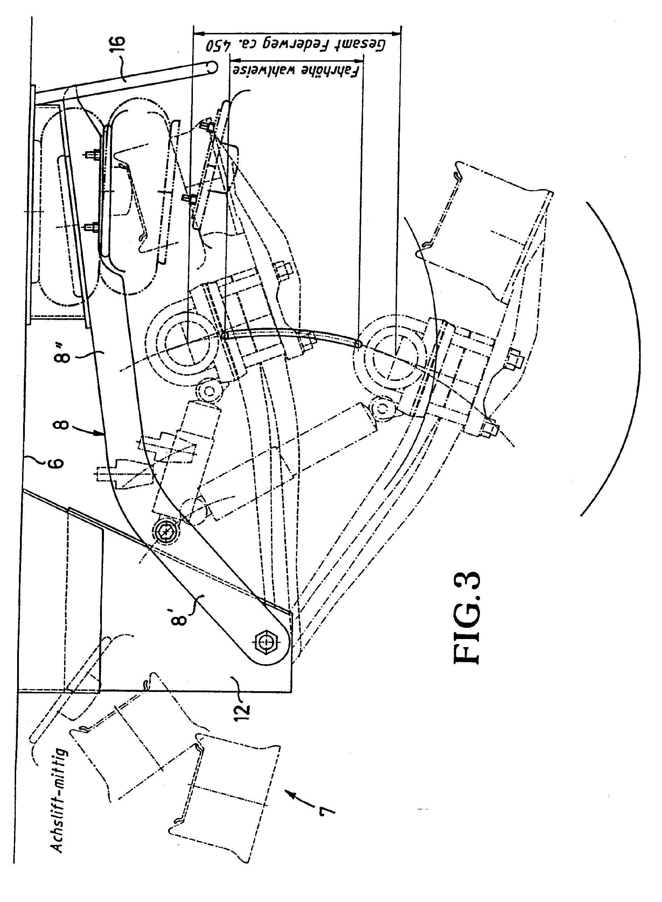

Die Achsaufhängung gemäß den Fig. 1 bis 3 ist für eine mit einem starren Achskörper 1 ausgestattete Fahrzeugachse bestimmt. Der starre Achskörper ist beidseitig der Fahrzeugmittellängsebene starr mit einer Blattfederanordnung 2 verspannt, welche in dem dargestellten Fall aus einem unteren Tragfederblatt 2′ und einem oberen Führungsfederblatt 2˝ besteht. Die Federblätter 2′, 2˝ sind an ihrem vorderen Ende mittels nicht sichtbarer Federaugen auf einem einen Lagerpunkt 3 bildenden Lagerbolzen schwenkbar aufgenommen. Der Lagerpunkt 3 ist im unteren Bereich eines von dem Chassis 6 nach unten wegragenden Lagerbocks 12 vorgesehen. In der Achseinspannung 17, welche die hinteren Enden der Blattfedern 2′, 2˝ mit dem Achskörper 1 verspannt, ist auch ein von dem Achskörper 1 aus gesehen nach hinten ragender Tragarm 4 mit eingespannt, welcher als unteres Lager einer Luftfeder 5 dient. Die Luftfeder 5 besteht aus einem Luftfederbalg 11 und einem Luftfederkolben 18, auf welchem sich der Luftfederbalg 11 beim Einfedern abwälzt. Der Luftfederkolben 18 ist von dem hinteren freien Ende des Tragarms 4 aufgenommen. Mit seiner Oberseite ist der Luftfederbalg 11 an dem freien Ende einer in sich starren Schwinge 8 befestigt, welche in einem Lagerpunkt 3′ an dem Lagerbock 12 schwenkbar gehalten ist. Der Lagerpunkt 3′ fällt in dem dargestellten Beispiel mit dem Lagerpunkt 3 der Blattfederanordnung 2 zusammen, weil die Lagerpunkte 3, 3′ vom gleichen Lagerbolzen gebildet sind. Die Schwinge 8 ist somit in einer Ebene parallel zur Fahrzeuglängsmittelebene schwenkbar. Die Schwenklage der Schwinge 8 relativ zu dem Chassis 6 ist mittels eines Stellgliedes 9 einstellbar, welches in dem dargestellten Fall von einem Luftbalg 10 gebildet ist. Der Luftbalg 10 des Stellgliedes 9 stützt sich nach oben unmittelbar am Chassis 6 ab. Der Luftbalg 10 ist mit dem Druck beaufschlagbar, mit welcher auch die Luftfeder 5 beaufschlagt wird. Der wirksame Querschnitt des Luftbalges 10 des Stellgliedes 9 ist größer als derjenige des Luftfederbalges 11 der Luftfeder 5, so daß das Einfedern der Fahrzeugachse bei Benutzung des Fahrzeuges als Straßenfahrzeug von der Luftfeder 5 bestimmt ist, während der Luftbalg 10 des Stellgliedes 9 voll bis zu dem von einem Bügel gebildeten mechanischen Anschlag 16 für das äußere Ende der Schwinge 8 ausgefahren ist. Durch gestrichelte Linien ist angedeutet, welche unterschiedlichen Positionen die Fahrzeugachse und die mit ihr zusammenwirkenden Teile beim Ein- und Ausfedern einnehmen können.

An der Schwinge 8, und zwar etwa im Abstand von einem Viertel der Gesamtlänge der Schwinge 8 von dem Lagerpunkt 3′, ist ein Stoßdämpfer 13 angelenkt, welcher mit seinem anderen Ende an der Achseinspannung 17 angelenkt ist. Aus Fig. 1 ist zu ersehen, welche unterschiedlichen Winkel- und Streckungslagen der Stoßdämpfer 13 am Ein- und Ausfedern der Fahrzeugachse einnimmt.

An der Schwinge 8 ist ferner ein Luftfederventil 14 angeordnet, welches über ein Winkelgestänge 15 betätigbar ist, welches die Höhenlage des Achskörpers 1 relativ zu der Schwinge 8 feststellt und dementsprechend zur Einhaltung gleicher Höhenlage bei unterschiedlicher Beladung des Fahrzeuges die Luftfeder 5 entsprechend belüftet oder entlüftet, bis die gewünschte Sollhöhenlage des Achskörpers 1 erreicht ist.

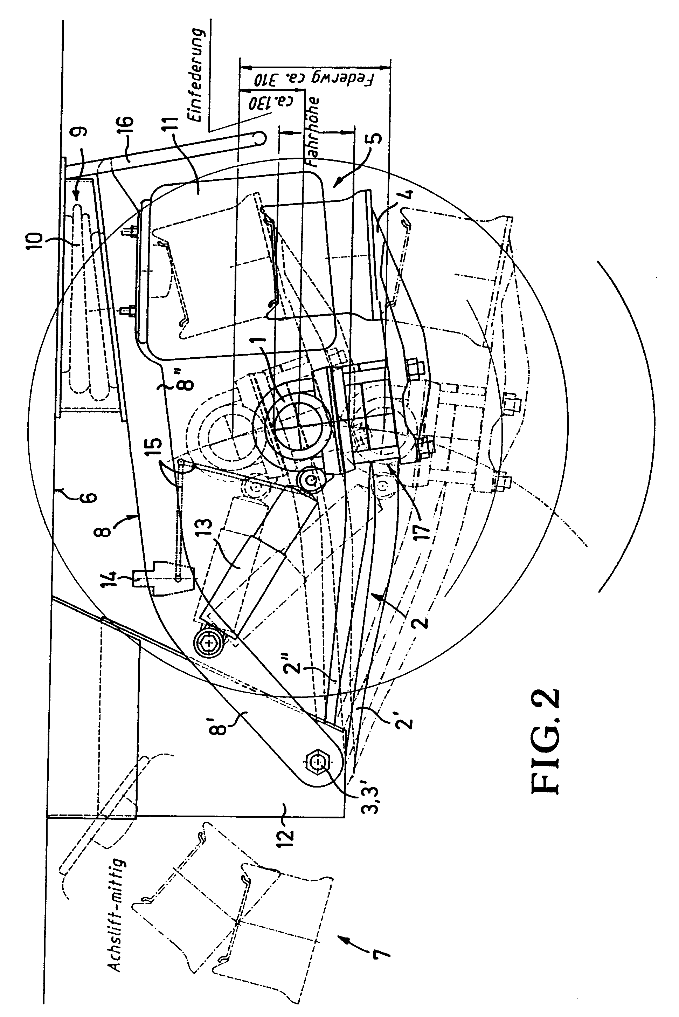

Mit Hilfe einer Achsanhebevorrichtung 7, welche in dem dargestellten Fall von einem pneumatischen Liftbalg, von welchem lediglich der Liftkolben und die Lagerplatte mit Stoßdämpfer angedeutet ist, kann die Fahrzeugachse bei Entlüftung der Luftfeder 5 und des Stellgliedes 9 soweit nach oben geschwenkt werden, wie dies in Fig. 2 veranschaulicht ist. In ausgezogener Linie ist dort die oberste Schwenklage der Schwinge 8 und in gestrichelten Linien die zusätzlich oberste Schwenklage des Achskörpers 1 mit der Achseinspannung 17 und der Blattfederanordnung 2 veranschaulicht. In dieser am weitesten nach oben geschwenkten Lage kann das mit einer solchen Achsaufhängung ausgestattete Fahrzeug als Bahnwaggon aufgebockt werden, wobei sämtliche derzeit geforderten maximalen Lifthöhen ohne weiteres erreichbar sind.

Aus der Zeichnung ist ferner erkennbar, daß die Schwinge 8 abgewinkelt ist, wobei der kürzere Arm 8′ etwa 1/3 und der längere Arm 8˝ etwa 2/3 der Länge der Schwinge 8 ausmachen. Der kürzere Arm 8′ ist an seinem äußeren Ende an dem Lagerpunkt 3′ angelenkt, während sich der Luftfederbalg 11 der Luftfeder 5 in der Nähe des freien Endes des längeren Arms 8˝ abstützt. Aus Fig. 1 ist erkennbar, daß bei vollbelüftetem Stellglied 9 der kürzere Arm 8′ von vorne nach hinten schräg nach oben verläuft, während der längere Arm 8˝ etwa horizontal verläuft. Hierdurch läßt sich eine geringe Bauhöhe gewährleisten.

### Bezugszeichenliste:

- 1: Achskörper
- 2: Blattfederanordnung
- 2′: Tragblattfeder
- 2˝: Führungsblattfeder
- 3: Lagerpunkt
- 3′: Lagerpunkt
- 4: Tragarm
- 5: Luftfeder
- 6: Chassis
- 7: Achsanhebevorrichtung
- 8: Schräge
- 8′: kürzerer Arm
- 8˝: längerer Arm
- 9: Stellglied
- 10: Luftbalg des Stellgliedes
- 11: Luftfederbalg der Luftfeder
- 12: Lagerbock
- 13: Stoßdämpfer
- 14: Luftfederventil
- 15: Gestänge
- 16: Anschlag
- 17: Achseinspannung
- 18: Luftfederkolben

## Patentansprüche

1. Anhebbare luftgefederte Fahrzeugachse mit einem starren Achskörper (1) mit wenigstens je einem Führungslenker (2) beidseits der Fahrzeuglängsmittelebene, welcher mit seinem vorderen Ende an einem chassisfesten Lagerpunkt (1) angelenkt und im Abstand davon starr mit dem Achskörper (1) verspannt ist, wobei ein von dem Achskörper (1) aus jeweils nach hinten ragender Tragarm (4) das untere Lager einer Luftfeder (5) bildet, die sich nach oben an dem freien Ende einer um einen chassisfesten Lagerpunkt (3′) schwenkbaren Schwinge (8) abstützt, auf deren Oberseite sich das Chassis (6) abstützt, und mit einer Achsanhebevorrichtung (7) und einem die Schwenklage der Schwinge (8) relativ zu dem Chassis (6) bestimmenden Stellglied (9), dadurch gekennzeichnet, daß das Stellglied (9) als Luftbalg (10) ausgebildet und zwischen Chassis (6) und Schwinge (8) wirksam ist und daß die Fahrzeugachse einen chassisfesten, den Stellweg in Ausschwenkrichtung begrenzenden Anschlag (16) aufweist, an dem die Schwinge (8) im Straßenbetrieb des Fahrzeugs gehalten werden kann.

2. Fahrzeugachse nach Anspruch 1, dadurch gekennzeichnet, daß die wirksame Querschnittsfläche des Luftbalges (10) größer ist als die wirksame Fläche des Luftfederbalges (11) der Luftfeder (5).

3. Fahrzeugachse nach einem der Ansprüche 1 und 2, dadurch gekennzeichnet, daß die Schwinge (8) mit ihrem vorderen Ende an dem chassisfesten Lagerpunkt (3′) gelagert ist.

4. Fahrzeugachse nach Anspruch 3, dadurch gekennzeichnet, daß der Führungslenker (2) und die Schwinge (8) einen gemeinsamen Lagerpunkt (3, 3′) haben.

5. Fahrzeugachse nach Anspruch 3 oder 4, dadurch gekennzeichnet, daß die Lagerpunkte (3, 3′) des Führungslenkers (2) und/oder der Schwinge (8) an einem von dem Chassis (6) nach unten ragenden Lagerbock (12) angeordnet sind/ist.

6. Fahrzeugachse nach einem der Ansprüche 1 bis 5, mit je einem zwischen Chassis (6) und Achskörper (1) wirksamen Stoßdämpfer (13), dadurch gekennzeichnet, daß der Stoßdämpfer (13) mit seinem einen Ende an der Schwinge (8) angelenkt ist.

7. Fahrzeugachse nach einem der Ansprüche 1 bis 6, mit einem Luftfederventil (14) für die lastabhängige Druckbeaufschlagung der Luftfeder (5), welches über ein den lastabhängigen Einfederungsweg der Luftfeder (5) feststellendes Gestänge (15) regelbar ist, dadurch gekennzeichnet, daß das Luftfederventil (14) an der Schwinge (8) angeordnet ist.

8. Fahrzeugachse nach einem der Ansprüche 1 bis 7, dadurch gekennzeichnet, daß die Schwinge (8) unter einem stumpfen Winkel derart abgewinkelt ist, daß der eine, vorzugsweise kürzere, an dem Lagerpunkt (3′) angelenkte Arm (8′) von vorne nach hinten schräg nach oben und der andere, vorzugsweise längere, frei schwenkbare Arm (8˝) in voll ausgefahrener Lage des Stellgliedes 89) etwa horizontal verläuft.

9. Fahrzeugachse nach einem der Ansprüche 1 bis 8, dadurch gekennzeichnet, daß die Fahrzeugachse in ihrer maximal angehobenen Lage mechanisch verriegelbar ist.

## Claims

1. A liftable air-sprung vehicle axle having a rigid axle body (1), at least one guide arm (2) on each of the two sides of the longitudinal midplane of the vehicle, which guide arm pivots at its forward end about a bearing point (3) integral with the chassis and is rigidly clamped at a distance therefrom to the axle body (1), whilst a supporting arm (4) extending rearwardly from the axle body (1) on each side forms the base bearing of an air spring (5), the free upper face of which bears on a swinging arm (8) pivoting about a bearing point (3′) integral with the chassis, on the top face of which arm the chassis (6) is supported, together with an axle lifting device (7) and a setting member (9) which determines the angular setting of the swinging arm (8) relative to the chassis (6), characterized in that the setting member (9) is adapted as an air bellows (10) acting between the chassis (6) and the swinging arm (8), the motor vehicle axle also having a chassis-mounted stop (16), which determines the outer setting angle limit and on which the swinging arm (8) can be held whilst the vehicle is on the road.

2. A vehicle axle as in Claim 1, characterized in that the effective cross-sectional area of the air bellows (10) exceeds the effective area of the air-spring bellows (11) of the air spring (5).

3. A vehicle axle as in either of Claims 1 or 2, characterized in that the forward end of the swinging arm (8) pivots about the bearing point (3′) integral with the chassis.

4. A vehicle axle as in Claim 3, characterized in that the leaf spring assembly (2) and the swinging arm (8) pivot about a common bearing point (3, 3′).

5. A vehicle axle as in Claim 3 or 4, characterized in that the bearing point(s) (3, 3′) of the leaf spring assembly (2) and/or the swinging arm (8) is/are disposed on a bearing block (12) extending downwardly from the chassis (6).

6. A vehicle axle as in any of Claims 1 to 5, having one or more shock absorbers (13) disposed between the chassis (6) and the axle body (1), characterized in that one end of each shock absorber (13) is linked to the swinging arm (8).

7. A vehicle axle as in any of Claims 1 to 6, having an air-spring valve (14) for the load-dependent pressurization of the air spring (5), controllable by a linkage (15) which determines the load-dependent compression of the air spring (5), characterized in that the air-spring valve (14) is mounted on the swinging arm (8).

8. A vehicle axle as in any of Claims 1 to 7, characterized in that the swinging arm (8) is bent through an obtuse angle, so that the front and preferably shorter arm (8′) pivoting about the bearing point (3′) slopes upwardly from front to rear, whilst the rear and preferably longer arm (8˝) pivots freely and extends more or less horizontally when the setting member (9) is fully extended.

9. A vehicle axle as in any of Claims 1 to 8, characterized in that the motor vehicle axle can be locked mechanically in the fully lifted setting.

## Revendications

1. Essieu relevable de véhicule à suspension pneumatique, comportant un corps d'essieu (1) rigide avec, de chaque côté du plan médian longitudinal du véhicule, au moins un bras de guidage (2) qui est articulé par son extrémité antérieure sur un point d'articulation (1) solidaire du châssis et qui, à distance de celui-ci, est fixé rigidement sur le corps d'essieu (1), un bras porteur (4) qui s'étend à partir du corps d'essieu (1) vers l'arrière et forme unappui inférieur pour un ressort pneumatique (5) qui prend appui vers le haut sur l'extrémité libre d'un bras oscillant (8) monté pivotant autour d'un point d'articulation (3′) solidaire du châssis, un dispositif (7) de relevage d'essieu et un organe de réglage (9) qui détermine la position en rotation du bras oscillant (8) par rapport au châssis (6), caractérisé par le fait que l'organe de réglage (9) est agencé sous forme de soufflet pneumatique (10) et agit entre le châssis (6) et le bras oscillant (8) et par le fait que l'essieu du véhicule présente une butée (16) solidaire du châssis qui limite la course de réglage dans la direction de sortie et sur laquelle le bras oscillant (8) peut être appliqué et maintenu lorsque le véhicule est utilisé sur route.

2. Essieu de véhicule selon la revendication 1, caractérisé par le fait que la section efficace du soufflet pneumatique (10) est supérieure à la surface efficace du soufflet (11) du ressort pneumatique (5).

3. Essieu de véhicule selon l'une des revendications 1 et 2, caractérisé par le fait que le bras oscillant (8) est lié par son extrémité antérieure au point d'articulation (3′) solidaire du châssis.

4. Essieu de véhicule selon la revendication 3, caractérisé par le fait que le bras de guidage (2) et le bras oscillant (8) ont un point d'articulation (3, 3′) commun.

5. Essieu de véhicule selon la revendication 3 ou 4, caractérisé par le fait que les points d'articulation (3, 3′) du bras de guidage (2) e/ou du bras oscillant (8) sont disposés sur un corps de palier (12) qui fait saillie vers le bas sur le châssis (6).

6. Essieu de véhicule selon l'une des revendications 1 à 5 avec respectivement un amortisseur (13) qui agit entre le châssis (6) et le corps d'essieu (1), caractérisé par le fait que l'amortisseur (13) est articulé par l'une de ses extrémités sur le bras oscillant (8).

7. Essieu de véhicule selon l'une des revendications 1 à 6 comportant une valve (14) pour faire varier la pression appliquée au ressort pneumatique (5) en fonction de la charge, laquelle valve est commandée par une tringlerie qui détecte le fléchissement du ressort pneumatique en fonction de la charge, caractérisé par le fait que la valve (14) du ressort pneumatique est montée sur le bras oscillant (8).

8. Essieu de véhicule selon l'une des revendications 1 à 7, caractérisé par le fait que le bras oscillant forme un angle obtus tel que le bras (8′), de préférence plus court, lié au point d'articulation (3′) s'étende de l'avant vers l'arrière en biais vers le haut et que l'autre bras (8˝), de préférence plus long, soit sensiblement horizontal lorsque l'organe de réglage (89) est en position totalement déployée.

9. Essieu de véhicule selon l'une des revendications 1 à 8, caractérisé par le fait que l'essieu de véhicule peut être verrouillée par des moyens mécaniques dans sa position relevée extrême.
